Europäisches Patentamt

European Patent Office

Office européen des brevets

(11) Veröffentlichungsnummer : **0 424 660 B1**

# (12) EUROPÄISCHE PATENTSCHRIFT

(45) Veröffentlichungstag der Patentschrift :
**20.12.95 Patentblatt 95/51**

(51) Int. Cl.⁶ : **G21D 5/16**

(21) Anmeldenummer : **90117795.6**

(22) Anmeldetag : **15.09.90**

(54) **Gas/Dampf-Kraftwerksanlage**

(30) Priorität : **24.10.89 CH 3839/89**

(43) Veröffentlichungstag der Anmeldung :
**02.05.91 Patentblatt 91/18**

(45) Bekanntmachung des Hinweises auf die
Patenterteilung :
**20.12.95 Patentblatt 95/51**

(84) Benannte Vertragsstaaten :
**BE CH DE FR GB LI**

(56) Entgegenhaltungen :
**BE-A- 561 251**
**BE-A- 640 192**
**FR-A- 1 522 414**
**US-A- 3 172 258**

(73) Patentinhaber : **ASEA BROWN BOVERI AG**
**Haselstrasse 16**
**CH-5401 Baden (CH)**

(72) Erfinder : **Nicolin, Curt, Dr.**
**Mariebergs Säteri**
**S-147 92 Grödinge (SE)**
Erfinder : **Frutschi, Hans-Ulrich**
**Bruggerstrasse 9**
**CH-5223 Riniken (CH)**
Erfinder : **Bolis, Giacomo**
**Neudorfstrasse 23**
**CH-8050 Zürich (CH)**

EP 0 424 660 B1

## Beschreibung

Die vorliegende Erfindung betrifft eine Gas/Dampf-Kraftwerksanlage gemäss Oberbegriff des Anspruchs 1.

Stand der Technik

Im Falle einer Kernkraftwerksanlage mit einem wassergekühlten Reaktor kann nur Sattdampf bescheidenen Druckes erzeugt werden. Ein solcher Reaktor arbeitet nach dem heutigen Entwicklungsstand mit bescheidenen Dampfdaten, beispielsweise mit 63 bar und 280 Grad Celsius, und erzielt so einen Konversionswirkungsgrad der im Reaktor erzeugten Energie in elektrische Energie von etwa 33%.

Dass ein solcher Konversionswirkungsgrad der heute erwarteten Betriebswirtschaftlichkeit bei der Energieerzeugung nicht mehr zu befriedigen vermag, versteht sich von selbst.

Bei rein fossil befeuerten Kraftwerksanlagen ist stand der Technik, eine Gasturbinenanlage mit einem Abhitzedampferzeuger (= Abhitzekessel) zu erweitern und mit einer nachgeschalteten Dampfturbinenanlage zu kombinieren, obwohl fossil befeuerte Dampfkraftwerke wirkungsgrade von über 40% erreichen können.

Diese sogenannten Kombianlagen weisen sich dann durch sehr gute Konversionswirkungsgrade aus, die sich in der Grössenordnung von 50 bis 52% bewegen. Diese hohen wirkungsgrade entstehen aus dem zusammenwirken einer Gasturbogruppe mit mindestens einem Dampfturbinenkreislauf, wobei die Gasturbinenabsase durch einen Abhitzekessel geleitet werden, in welchem das Restwärmepotential ebendieser Abgase zur Erzeugung des für die Beaufschlagung einer Dampfturbine benötigten Dampfes herangezogen wird.

Dabei ist bei Kombianlagen festzustellen, dass die isotherm verlaufende Verdampfung, des Speisewassers in einem Abhitzekessel naturgemäss bei sinkender Temperatur der Abgase erfolgt, wobei im Mittel eine unnötig hohe Temperaturdifferenz entsteht. Dadurch ergeben sich im Abhitzekessel unweigerlich unnötige zusätzliche Exergieverluste (Verluste des Arbeitsvermögens der Abgase), welche sich, in einem T/Q-Diagramm graphisch betrachtet, als Fläche zwischen der steilen Temperaturabfallkurve der Abgase im Abhitzekessel und der flachen Verdampfungskurve des Speisewassers darstellen lassen.

Zwar lässt sich hier durch den Einsatz eines Mehrdruck-Abhitzekessels eine Korrektur anbringen. Indessen, mehr als zwei Druckstufen sind sowohl konstruktiv als auch hinsichtlich des Betriebes nicht leicht zu handhaben, so dass auch mittels eines solchen Abhitzekessels die Exergieverluste nicht im erwünschten Masse vermindert werden können.

In der Druckschrift BE-A-640 192 ist eine Gas/Dampf-Kraftwerksanlage bekanntgeworden, welche im wesentlichen aus einer Gasturbine, einem der Gasturbine nachgeschalteten Wärmetauscher, der von den Abgasen der Gasturbine durchströmt wird, und einem Dampfkreislauf, der einen Reaktor und eine Dampfturbine umfasst. Der Wärmetauscher umfasst eine erste Stufe zur Vorwärmung von Speisewasser des Reaktors. Dabei wird zur Unterstützung der Speisewasser-Vorwärmer durch die Abgase der Dampfturbine eine Zwischendampftrocknung vorgesehen, weshalb hier bei dieser Ueberhitzungsart mit einem Wirkungsgradverlust zu rechnen ist.

Aus den Druckschriften BE-A-561 251 und FR-A-1 522 414 sind Schaltungen bekanntgeworden, welche zwar Kraftwerksanlagen mit Reaktor und Dampfkreislauf zum Inhalt haben, indessen keine Gasturbine miteinbezogen ist. Zwar wird die Ueberhitzung des Dampfes durch einen fossil befeuerten Dampferzeuger bereitgestellt, wobei aber hier die Verdampfung nicht im Reaktor selbst erfolgt. Da bei diesen Schaltungen sonach keine Gasturbine im Spiel ist, muss auf die Ausnützungscharakteristik der Rauchgase nicht Rücksicht genommen werden, weil bei einer normalen Kesselfeuerung ein weitaus grösserer Freiraum in der temperaturabhängigen Nutzung der Rauchgase gegeben ist, so dass sich hier die Problematik, wie die exergiebedingten Verluste im Zusammenhang mit der Ueberhitzung bei einer Kraftwerksanlage mit Gasturbine minimiert werden können, gar nicht stellt.

Aufgabe der Erfindung

Hier will die Erfindung Abhilfe schaffen. Der Erfindung, wie sie in den Ansprüchen gekennzeichnet ist, liegt die Aufgabe zugrunde, bei einer Gas/Dampf-Kraftwerksanlage der eingangs genannten Art die Exergieverluste bei der Verdampfung zu minimieren.

Die wesentlichen Vorteile der Erfindung sind darin zu sehen, dass der das Exergiepotential der thermisch angebotenen Leistung eines Kernraktors optimal ausnützende Verdampfungsvorgang von einer Speisewasservorwärmung und einer Dampfüberhitzung im Abhitzekessel einer Gasturbine flankiert wird. Denn, weil sich sowohl die Speisewasservorwärmung wie auch die Dampfüberhitzung im Gegenstrom zu der Rauchgasabkühlung vollzieht, ergeben sich hier naturgemäss keine über das für den Wärmeübergang erforderliche Mass hinausgehenden Exergieverluste. Insgesamt betrachtet ergeben sich so für den ganzen Bereich der Wärmezufuhr, welche sich in einen nuklearen und in einen fossilen Teil aufspaltet die minimal möglichen Exergieverluste und somit der kleinstmögliche Wirkungsgradverlust der Konversion von Wärme in Elektrizität infolge einer schlechten thermischen Impedanzanpassung. Von ausschlaggebender Bedeutung jedoch ist der Umstand, dass dies besonders für den fossil zugeführten Energieanteil zutrifft, und zwar deshalb, weil dadurch die Umweltbelastung durch fossile Brennstoffe minimiert wird. Für den Fall, dass Erdgas zum Einsatz kommt, kann auf diese Weise zusätzliche fossil erzeugte elektrische Energie mit minimalem Ausstoss an Kohlendioxid realisiert werden.

Weitere Vorteile der Erfindung ergeben sich im Zusammenhang mit einer Leistungserweiterung einer bestehenden Kernkraftwerksanlage, indem der Kernkraftwerksanlage eine Anzahl Brennkraftmaschinen, vorzugsweise Gasturbinenanlagen, vorgeschaltet werden.

Sollten bei letztgenannter Konfiguration korrigierende Eingriffe in Bezug auf die Schluckfähigkeit der Dampfturbinen und die Leistungsmöglichkeit des Generators klein bleiben oder ganz ausfallen, so lässt sich eine Schaltung vorsehen, bei welcher der überschüssige Dampfanteil aus der Ueberhitzungsstufe im Wärmetauscher abgezweigt und in den Kreislauf der Brennkraftmaschinen, vorzugsweise in die Brennkammern derselben, abgezweigt wird, und dort dafür sorgt, dass die sich ergebende Leistungseinbusse im Dampfkreislauf der Kernkraftwerksanlage durch die Leistungssteigerung der Brennkraftmaschinen etwa kompensiert wird.

Ein weiterer Vorteil der Erfindung betrifft die Anpassungsfähigkeit der Schaltung: Bei mengenmässig und/oder kalorisch reduziertem Potential der von den Brennkraftmaschinen bereitgestellten Abgasen braucht die Nennleistung des Reaktors nicht reduziert zu werden.

Denn es ist durchaus möglich, nur einen Teilstrom des vom Kondensator kommenden Speisewassers im Abhitzekessel vorzuwärmen und daselbst auch nur einen Teil des im Reaktor erzeugten Dampfes zu überhitzen, was die Installation einer entsprechend kleineren Gasturbinenanlage erlaubt. Dennoch wird der hierfür erforderliche fossile Energieanteil mit dem oben prognostizierten verbesserten Konversionswirkungsgrad umgesetzt.

Ein weiterer Vorteil der Erfindung ist darin zu sehen, dass die Schaltung eine grosse Ausbaufähigkeit und kombinierbarkeit aufweist, so wenn das Potential der Vorwärmstufe im Abhitzekessel in bedarfmässiger Menge zum Betrieb eines fremden Wärmeverbrauchers herangezogen wird.

Vorteilhafte und zweckmässige Weiterbildungen der erfindungsgemässen Aufgabenlösung sind in den weiteren abhängigen Ansprüchen gekennzeichnet.

Im folgenden wird anhand der Zeichnung Ausführungsbeispiele der Erfindung schematisch dargestellt und näher erläutert. Alle für das unmittelbare Verständnis der Erfindung nicht erforderlichen Elemente sind fortgelassen. Die Strömungsrichtung der Medien ist mit Pfeilen angegeben. In den verschiedenen Figuren sind jeweils gleiche Elemente mit den gleichen Bezugszeichen versehen.

Kurze Beschreibung der Figuren

Es zeigt:

Fig. 1 eine Schaltung einer Kraftwerksanlage, welche aus dem Zusammenwirken einer Gasturbinenanlage und einer Kernkraftwerksanlage besteht;

Fig. 2 ein T/$\dot{Q}$-Diagramm ebendieser Anlage nach Fig. 1;

Fig. 3 ein Sankeydiagramm der Energieflüsse ebendieser Anlage nach Fig. 1 und

Fig. 4 eine Schaltung einer Kraftwerksanlage mit einem fortschrittlichen, zukünftigen, wassergekühlten Reaktor, gepaart mit einer ebenfalls fortschrittlichen, zukünftigen Gasturbinenanlage.

Beschreibung der Ausführungsbeispiele

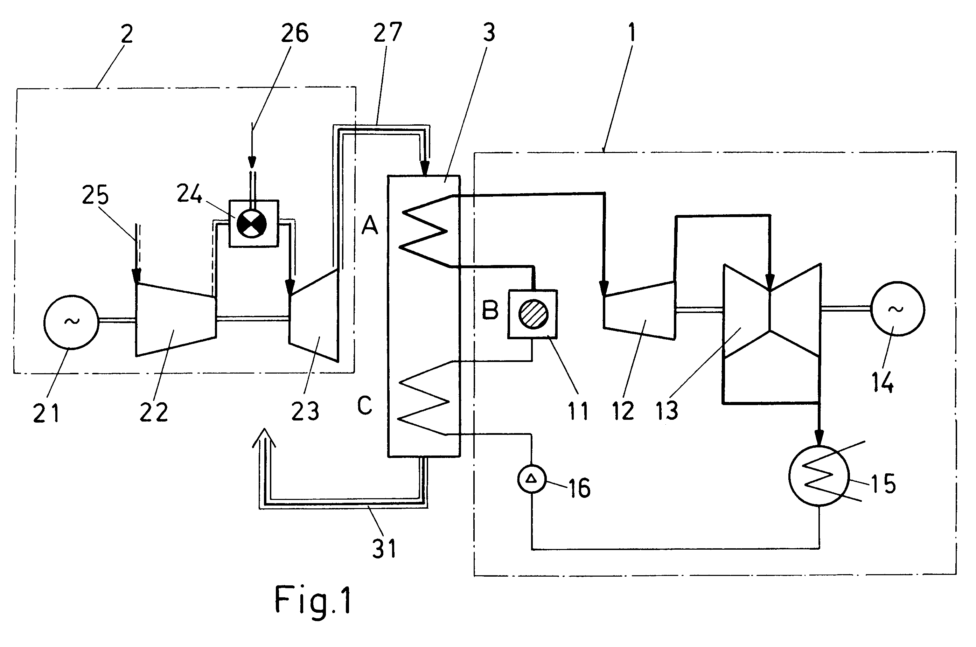

Fig. 1 zeigt eine Schaltung einer Kraftwerksanlage, welche aus dem Zusammenwirken einer Kernkraftwerksanlage 1 mit einer Gasturbinenanlage 2 besteht, wobei zwischen die beiden Blöcke ein Abhitzekessel 3 geschaltet ist. Die dem Abhitzekessel 3 sowie der Kernkraftwerksanlage 1 vorgeschaltete Gasturbinenanlage 2 besteht im wesentlichen aus einem Verdichter 22, einer mit diesem vorzugsweise auf einer gemeinsamen Welle angeordneten Gasturbine 23, einem an die Rotation dieser beiden Maschinen angekoppelten Generator 21 und einer Brennkammer 24. Die angesaugte Luft 25 wird in den Verdichter 22 geleitet, wo die Kompression stattfindet, anschliessend strömt diese komprimierte Luft in die Brennkammer 24. Als Brennstoff 26 zum Betrieb der Brennkammer 24 kommen gasförmige und/oder flüssige Brennstoffe in Frage. Die in der Brennkammer 24 aufbereiteten Heissgase beaufschlagen im anschliessenden Prozess die Gasturbine 23; nach deren Entspannung strömen diese druckmässig verbrauchten Heissgase als Abgase 27 durch den Abhitzekessel 3, in welchem deren thermisches Restpotential weiter ausgenutzt wird. Die Kernkaftwerksanlage 1 besteht aus einem Leichtwasserreaktor 11, der für die Bereitstellung einer Sattdampfmenge sorgt, des weiteren, aus einer Hochdruck-Dampfturbine 12 und, dieser nachgeschaltet, einer Niederdruck-Dampfturbine 13. Ein Generator 14 ist an die Dampfturbinen angekoppelt. Ueber eine oder mehrere Abdampfleitungen strömt der entspannte Dampf aus der Niederdruck-Dampfturbine 13 in einen vorzugsweise durch Wasser oder Luft gekühlten Kondensator 15. Das sich daraus bildende Kondensat wird über eine Pumpe 16 in den Abhitzekessel 3 geleitet, wo es über die Stufe C eine Vorwärmung zu Speisewasser erfährt. Die nächste Verfahrensstufe besteht darin, dass das Speisewasser in den Reaktor 11 geleitet wird, wo die eigentliche Dampfbereitstellung in Form eines Sattdampfes B vonstatten geht. Nach dieser Aufbereitungsstufe im Reaktor 11 wird der Sattdampf wiederum in den Abhitzekessel 3 geleitet, wo über eine weitere wärmeübertragende Stufe die endgültige Dampfbereitstellung in Form eines überhitzen Dampfes A stattfindet. Dieser mit einem maximierten thermischen potential aufbereitete Dampf beaufschlagt nachfolgend die Hochdruck-Dampfturbine 12 und anschliessend die Niederdruck-Dampfturbine 13, welche beide die elektrische Leistung des dort angekoppelten Generators 14 erzeugen. Nachdem die Abgase 27 im Abhitzekessel 3 ihr Wärmepotential weitgehend abgegeben haben, strömen sie als Rauchgase 31 über einen nicht dargestellten Kamin ab. Wahlweise kann dem Abhitzekessel 3 eine nicht dargestellte Zusatzfeuerung vorgeschaltet werden, welche die Abgase 27 zu einer höheren wärmeaustauschfähigen Temperatur bringt. Eine solche Massnahme erhöht zwar die erzeugbare elektrische Leistung, reduziert aber den Konversionswirkungsgrad.

Als quantitatives Ausführungsbeispiel sei im folgenden eine Kernkraftwerksanlage mit einem Leichtwasserreaktor 11 für eine thermische Leistung von 3000 MW zugrunde gelegt. Um die Speisewasservorerwärmung in Stufe C auf 220 Grad Celsius und die Dampferhitzung in Stufe A des im Reaktor 11 bei 280 Grad Celsius Siedetemperatur erzeugten Sattdampfes in Stufe B schlussendlich auf 480 Grad Celsius zu bringen, ist im Abhitzekessel 3 ein Rauchgasmassenstrom erforderlich, der den Frischdampfmassenstrom um einen Faktor von 2,75 übersteigt. Die in diesem Beispiel eingesetzten Gasturbinen weisen je einen Rauchgasmassenstrom von 500 kg/s auf und leisten je 141 MWe. Ihr Konversionswirkungsgrad beträgt 33,6%. Um den Frischdampfmassenstrom aus dem Reaktor 11 von 1127 kg/s zu überhitzen und das Speisewasser vorzuwärmen, ist ein totaler Abgasmassenstrom 27 von 4480 kg/s erforderlich. Dazu werden 9 Gasturbinen benötigt, welche zusammen eine Leistung von 1269 MWe erzeugen. Weil die Dampfturbinen 12 und 14, allenfalls nach entsprechender Anpassung, mit überhitzem Dampf arbeiten und dort für die Speisewasservorwärmung keine Dampfmenge mehr entnommen werden muss, leisten diese zusammen 1710 MWe. Die Integration der Gasturbinenanlage 2 mit ihrer Anzahl Gasturbinen in die Kernkrafwerksanlage 1 ermöglicht also eine gesamte Leistung von 3000 MWe, gegenüber den 1000 MWe aus der ursprünglichen Kernkraftwerksanlage.

Die 3779 MWth fossilen Brennstoffaufwandes für alle Gasturbinen werden mit 52,4% Wirkungsgrad in elektrische Energie umgewandelt, denn es ist:

$$\eta\text{th foss} = \Delta P / \Delta \dot{Q}\text{foss} = (Pdt - Pdto + Pgt) / \Delta \dot{Q}\text{foss}$$
$$= (1710 - 1000 + 1269) / 3779$$
$$= 0{,}524$$

Ein einziges Kernkraftwerk, entsprechend kombiniert, würde es also ermöglichen, nochmals die doppelte Leistung des Kernkraftwerks zu gewinnen, und dies mit einem sehr hohen Konversionswirkungsgrad, was eine höchst effiziente und deshalb umweltfreundliche Nutzung des fossilen Brennstoffes, bevorzugt Erdgas, bedeutete. Besonders interessant ist eine solche Schaltung unter dem Aspekt der Investitionen, wenn sie als Retrofit-Massnahme zu einer bereits bestehenden Kernkraftwerksanlage konzipiert wird.

Die Schaltung bleibt auch bei der genannten Konzeption sehr anpassungsfähig: Vermag beispielsweise die Schluckfähigkeit der Dampfturbinen die anfallende Dampfmenge nicht zu schlukken, oder ist das Leistungsvermögen des vorhandenen Generators hierzu am Anschlag, so kann der überschüssige Dampfanteil aus der Ueberhtzungsstuffe im Abhitzekessel 3 abgezweigt und in den Kreislauf der Gasturbinenanlagen 2, vorzugsweise in die Brennkammer 24 derselben, eingeführt werden. Die sich dadurch ergebende Leistungseinbusse im Dampfkreislauf der Kernkraftwerksanlage 1 wird durch eine Leistungssteigerung der Gasturbinenanlagen 2 weitgehend wettgemacht. Des weiteren, bei einem reduzierten Potential an Abgasen, sei es mengenmässig und/oder kalorisch, braucht die Nennleistung des Reaktors 11 nicht reduziert zu werden; ein Teil der im Abhitzekessel 3 nicht verarbeitbaren Sattdampfmenge B aus dem Reaktor 11 wird abgezweigt und den Dampfturbinen des Dampfkreislaufes der Kernkraftwerksanlage 1 direkt zugeführt. Dabei kann es vorteilhaft sein, diesen überschüssigen, durch den Abhitzekessel 3 nicht überhitzbaren Dampfanteil zu drosseln und so leicht überhitzt an passender stelle in die Dampfturbinen zu führen. Die letztgenannten zwei Schaltungsmöglichkeiten sind in Fig. 1 nicht dargestellt, da sie sich aufgrund obiger Beschreibung ohne weiteres nachempfinden lassen.

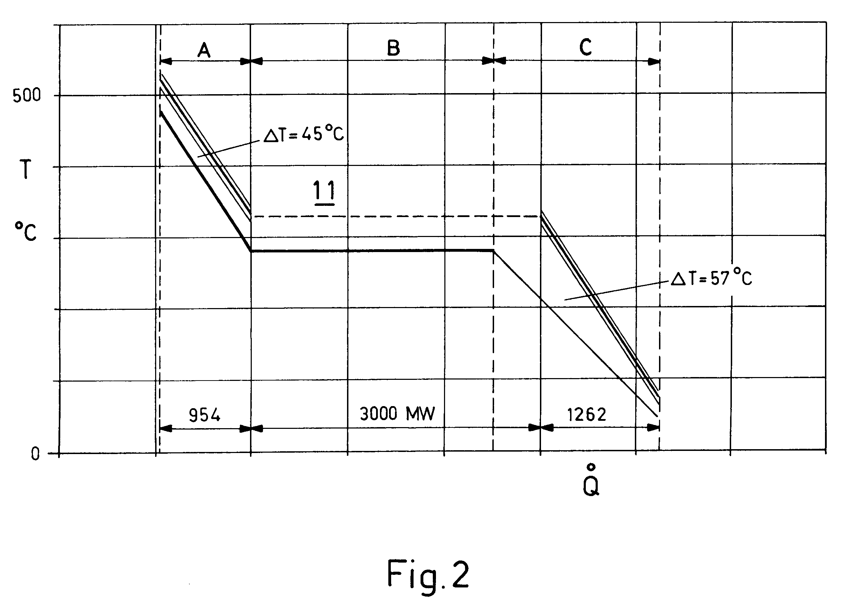

In Fig. 2 wird die Schaltung nach Fig. 1 diagrammässig kommentiert. Man beachte in diesem Zusammenhang die minimierten Exergieverluste während des Verdampfungsvorganges entlang der Stufe B, wie auch während der Vorwärmung C und des Ueberhitzens A. Es resultieren nur die zur Wärmeübertragung erforderlichen Temperaturdifferenzen.

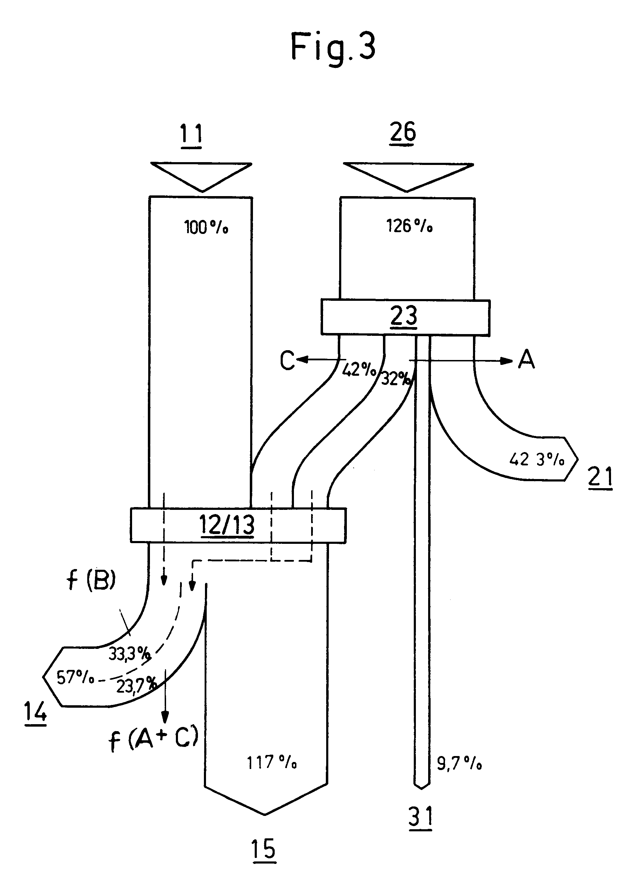

In Fig. 3 sind die Energieflüsse anhand eines Sankeydiagrammes dargestellt. Es lassen sich dabei drei Wirkungsgrade der Konversion der aufgewendeten thermischen Energie in elektrische Energie unterscheiden:

a) Wirkungsgrad des nuklearen Teils (Fig. 1, Pos. 1)

$$\eta nuk \ = \ 1000 \ MWe \ / \ 3000 \ MWth \ = \ 33{,}3\%$$

b) Wirkungsgrad des fossilen Teils (Fig. 1, Pos. 2, 3)

$$\eta fos \ = \ (42{,}3\% \ + \ 23{,}7\%) \ / \ 126\% \ = \ 52{,}4\%$$

c) Wirkungsgrad der gesamten Anlage Fig. 1, Pos. 1, 2, 3)

$$\eta ges \ = \ (57\% \ + \ 42{,}3\%) \ / \ (100\% \ + \ 126\%) \ = \ 43{,}9\%$$

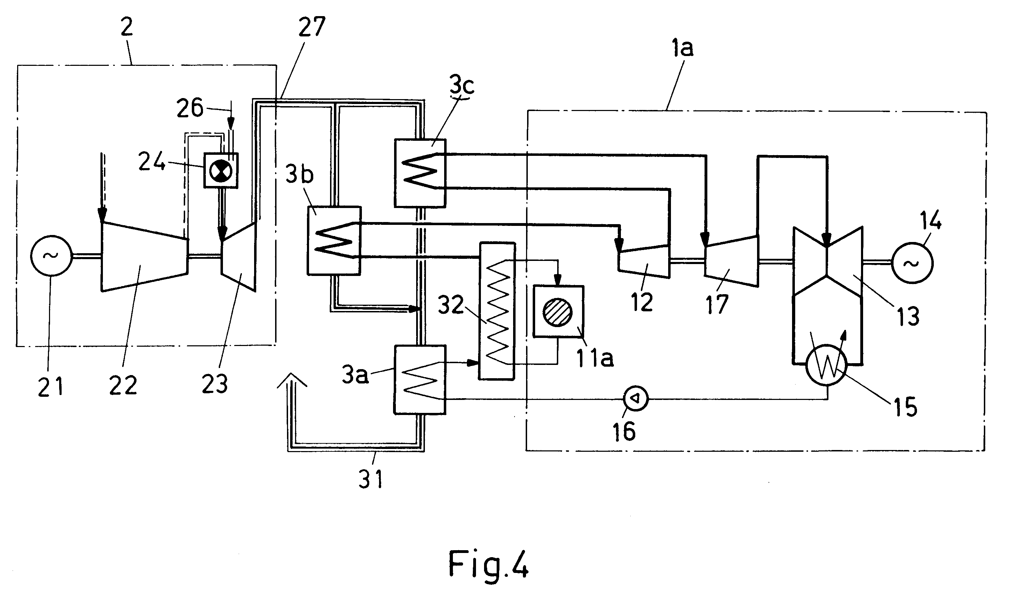

Wird ein fortschrittlicher, zukünftiger, wassergekühlter Reaktor in Rechnung gesetzt, der beispielsweise Sattdampf von 340 Grad Celsius bei 147 bar zu liefern im Stande ist, ergibt sich die Möglichkeit, eine Zwischenüberhitzung vorzusehen. Werden mit einem solchen, des weiteren, Gasturbinen der nächsten Generation gepaart, könnte daraus eine Dampftemperatur von ca. 550 Grad Celsius bereitgestellt werden, mit dem Resultat, dass der Konversionswirkungsgrad der Anlage eine kräftige Steigerung erfahren würde. Unter diesen Bedingungen könnte sogar ein Konzept einer neuen Anlage nach dem beschriebenen Hybridprinzip interessante Perspektiven eröffnen. Fig. 4 zeigt ein Beispiel einer solchen Schaltung.

Die nachfolgende Beschreibung von Fig. 4 beschränkt sich auf den Aufbau der gezeigten Schaltung. Ueber die Leistung der einzelnen Maschinen ist nichts gesagt. Die Gasturbinenanlage 2 entspricht aufbaumässig derjenigen gemäss Fig. 1. Demgegenüber weist die Kernkraftwerksanlage 1a eine Erweiterung auf, dergestalt, dass zwischen der Hochdruck-Dampfturbine 12 und der Niederdruck-Dampfturbine 13 eine Mitteldruck-Dampfturbine 17 zwischengeschaltet ist. Aus Sicherheitsgründen ist zwischem dem Reaktor 11a und den Abhitzeaggregaten ein Isolationswärmeübertrager 32 vorgesehen, der ein Erfordernis im Zusammenhang mit dem Einsatz eines zukünftigen Reaktors darstellt. Diese Vorkehrung ist im übrigen bei Druckwasserreaktoren ohnehin eine funktionsbedingte Massnahme.

Der ursprüngliche Abhitzekessel 3 gemäss Fig. 1 wird hier durch drei einzelne betriebsspezifische und eigenständige Abhitzeaggregate ersetzt. Das Kondensat aus dem Kondensator 15 durchströmt einen Vorwärmer 3a, der einem Ueberhitzer 3b und einem Zwischenüberhitzer 3c nachgeschaltet ist, worin zunächst die Speisewasservorwärmung stattfindet. Das so aufbereitete Speisewasser durchströmt dann den zum Reaktor 11a gehörenden und bereits erwähnten Isolationswärmeübertrager 32, in welchem die Sattdampfaufbereitung vonstatten geht. Anschliessend strömt dieses Medium durch den mittels der Abgase 27 ebenfalls individuell beaufschlagten Ueberhitzer 3b, in welchem die endgültige thermische Aufbereitung des Dampfes stattfindet. Der überhitze Dampf beaufschlagt im ersten Arbeitsgang die Hochdruck-Dampfturbine 12. Nach der Entspannung in dieser Stufe wird der Dampf durch den ebenfalls mittels der Abgase 27 beaufschlagten Zwischenüberhitzer 3c geleitet, in welchem er eine neuerliche thermische Aufbereitung erfährt, bevor damit die bereits erwähnte Mitteldruck-Dampfturbine 17, als intermediäre Einheit zwischen Hochdruck- und Niederdruck-Dampfturbine, beaufschlagt wird. Nach beendigtem Durchlauf dieser Stufe strömt der weitgehend entspannte Dampf direkt in die Niederdruck-Dampfturbine 13, wo er sein restliches Energiepotential abgibt. Die weiteren Schaltungsschritte entsprechen dann dem Ablauf nach Fig. 1. Mit der hier zugrundegelegten Schaltung werden Konversionswirkungsgrade der fossilen Energie von über 55% in Aussicht gestellt. Um im Wärmeaustauscher 32 Sattdampf hinreichend hohen Druckes zu erzeugen, wie er für die Einführung einer Zwischenüberhitzung erforderlich ist, wird im Reaktor 11a bei Wasserkühlung ein sehr hohes Druckniveau erforderlich. Letzteres kann durch die Wahl eines schwersiedenden Kühlmittels, beispielsweise Natrium, oder durch ein geeignetes Gas wie $CO_2$ oder He gemildert werden.

Durch den Betrieb der Gasturbinenanlage 2 unter Nennbedingungen mit 10% zugedrehten Verdichtervorleitreihen lassen sich die für Gasturbinen gegenüber Dampfturbinen kürzeren Revisionsintervalle überbrücken. Auf die Schaltungen gemäss Fig. 1 und allenfalls Fig. 4 übertragen, hiesse dies, dass für die Wahrnehmung des ganzen Vorwärmungs- und Ueberhitzungspotentials 10 Maschinen erforderlich wären. Danebst lässt sich noch die Ueberlegung anstellen, den Abhitzekessel 3 oder die Abhitzeaggregate 3a, 3b, 3c, oder eine andere Konfiguration an Abhitzeaggregaten, mit einer nicht dargestellten Zusatz feuerung auszurüsten. Dadurch könnte der nominelle Betrieb des Dampfteiles auch bei einer die Stillegung erfordernden Störung an einer oder mehreren Gasturbinenanlagen 2 aufrecht erhalten werden.

Selbsverständlich können auch hier die unter Fig. 1 beschriebenen weitergehenden Schaltungsmöglichkeiten, nämlich Umkanalisierung des überschüssigen Dampfanteiles in den Kreislauf der Gasturbinenanlage 2 oder Einleitung eines Anteiles der Sattdampfmenge in die Dampfturbinen des Dampfkreislaufes der Kernkraftwerksanlage 1a, vorgesehen werden.

**Patentansprüche**

1. Gas/Dampf-Kraftwerksanlage mit einer Gasturbine (23), einem der Gasturbine nachgeschalteten Wärmetauscher (3; 3a, 3b, 3c), der von den Rauchgasen (27) der Gasturbine durchströmt wird, und einem Dampfkreislauf (1), der einen Reaktor (11) und eine Dampfturbine (12, 13, 17) umfasst, wobei der Wärmetauscher (3; 3a, 3b, 3c) eine erste Stufe (C, 3a) zur Vorwärmung von Speisewasser des Reaktors (11) umfasst, dadurch gekennzeichnet, dass der Wärmetauscher (3; 3a, 3b, 3c) eine zweite Stufe (A, 3b) zur Ueberhitzung der im Reaktor (11) erzeugten Dampfmenge umfasst.

2. Gas/Dampf-Kraftwerksanlage nach Anspruch 1, dadurch gekennzeichnet, dass bei beschränktem Schluckvermögen der Dampfturbine (12, 13, 17) gegenüber der anfallenden Dampfmenge aus der Ueberhitzungsstufe (A) die hiervon überschüssige Dampfmenge in den Kreislauf (2) der Gasturbine (23) einleitbar ist.

3. Gas/Dampf-Kraftwerksanlage nach Anspruch 1, dadurch gekennzeichnet, dass bei mengenmässig und/oder kalorisch reduziertem Potential der durch den Wärmetauscher (3) strömenden Rauchgase (27) ein Teil der im Reaktor (11) bereitgestellten Sattdampfmenge (B) der Dampfturbine (12, 13, 17) zuführbar ist.

**Claims**

1. Gas/steam power station plant with a gas turbine (23), a heat exchanger (3; 3a, 3b, 3c) which is connected downstream of the gas turbine and has the flue gases (27) of the gas turbine flowing through it, and a steam circuit (1) which comprises a reactor (11) and a steam turbine (12, 13, 17), the heat exchanger (3; 3a, 3b, 3c) including a first stage (C, 3a) for preheating feed water of the reactor (11), characterized in that the heat exchanger (3; 3a, 3b, 3c) includes a second stage (A, 3b) for superheating the amount of steam produced in the reactor (11).

2. Gas/steam power station plant according to Claim 1, characterized in that with restricted absorption capacity of the steam turbine (12, 13, 17) with respect to the amount of steam produced by the superheat stage (A), the excess amount of steam from here can be introduced into the circuit (2) of the gas turbine.

3. Gas/steam power station plant according to Claim 1, characterized in that with a quantitatively and/or thermally reduced potential of the flue gases (27) flowing through the heat exchanger (3) a part of the amount of saturated steam (B) produced in the reactor (11) can be fed to the steam turbine (12, 13, 17).

**Revendications**

1. Installation gaz-vapeur avec une turbine à gaz (23), un échangeur thermique (3 ; 3a, 3b, 3c) monté en série avec la turbine à gaz, lequel est traversé par les gaz de combustion (27) de la turbine à gaz, et un circuit de vapeur (1), lequel comporte un réacteur (11) et une turbine à vapeur (12, 13, 17), l'échangeur thermique (3 ; 3a, 3b, 3c) comprenant un premier étage (C, 3a) destiné au préchauffage de l'eau d'alimentation du réacteur (11), caractérisée par le fait que l'échangeur thermique (3 ; 3a, 3b, 3c) comporte un deuxième étage (A, 3b) destiné à la surchauffe de la quantité de vapeur produite dans le réacteur (11).

2. Installation gaz-vapeur conforme à la revendication 1, caractérisée par le fait qu'en cas de possibilités d'aspiration limitées de la turbine à vapeur (12, 13, 17) par rapport à la quantité de vapeur produite dans l'étage de surchauffe (A), la quantité de vapeur superflue peut être dérivée dans le circuit (2) de la turbine à gaz (23).

3. Installation gaz-vapeur conforme à la revendication 1, caractérisée par le fait qu'en cas de potentiel quantitatif et/ou calorifique réduit des gaz de combustion (27) s'écoulant au travers de l'échangeur thermique (3), il est possible d'acheminer vers la turbine à vapeur (12, 13, 17) une partie de la quantité de vapeur saturée (B) produite dans le réacteur (11).

Fig.1

EP 0 424 660 B1

Fig.2

EP 0 424 660 B1

# Fig.3

Fig.4

EP 0 424 660 B1